# DEMANDE DE BREVET EUROPEEN

(11) **EP 4 443 606 A2**
(43) Date de publication de la demande: **09.10.2024**
(21) Numéro de dépôt: 24163750.3
(22) Date de dépôt: 15.03.2024
(51) Int. Cl.: H01M 10/613, H01M 10/625, H01M 10/6554, H01M 10/6556, H01M 50/204, H01M 50/244, H01M 50/249, H01M 50/264

(54) **PANIER STRUCTUREL DESTINÉ À ACCUEILLIR DES MODULES DE BATTERIE COMPRENANT DES ÉLÉMENTS ELECTROCHIMIQUES EMPILÉS, BATTERIE ET PROCÉDÉ DE MONTAGE ASSOCIÉS**

(30) Priorité: 16.03.2023 FR 2302442
(71) Demandeur: SAFT, 92300 Levallois-Perret (FR)
(72) Inventeur: PHILIPPE, Sébastien, 33127 SAINT JEAN D'ILLAC (FR); BENAIM, Julien, 33670 MADIRAC (FR)
(74) Mandataire: Lavoix

(57) **Abrégé**

Le panier (12) comporte un fond (30), deux parois (32) d'extrémité en regard et une pluralité de raidisseurs (36) longitudinaux, raccordant les parois (32) d'extrémité entre elles, les raidisseurs (36) s'étendant parallèlement à une direction longitudinale (B-B') de réception de module dans le panier (12), chaque paire de raidisseurs (36) longitudinaux adjacents délimitant entre eux un compartiment de réception de module.

Au moins un raidisseur (36) est mobile transversalement sur le fond (30) sur une course de réglage de position transversale du raidisseur (36). Le panier structurel (12) comprenant un système de verrouillage transversal (40) du ou de chaque raidisseur (36) mobile dans au moins deux positions transversales distinctes le long de la course de réglage, notamment dans toute position transversale le long de la course de réglage.

## Description

La présente invention concerne un panier structurel destiné à recevoir au moins un module de batterie comprenant plusieurs éléments électrochimiques empilés, le panier structurel comportant :
- un fond ;
- deux parois d'extrémité en regard, faisant saillie par rapport au fond pour délimiter avec le fond un espace intermédiaire, les parois d'extrémité étant destinées à s'étendre transversalement par rapport à une direction longitudinale de réception de module dans l'espace intermédiaire ;
- une pluralité de raidisseurs longitudinaux, raccordant les parois d'extrémité entre elles, les raidisseurs s'étendant parallèlement à la direction longitudinale de réception de module, chaque paire de raidisseurs longitudinaux adjacents délimitant entre eux un compartiment de réception de module.

Un tel panier structurel, lorsqu'il reçoit des modules de batterie (désignés par le terme anglais « cell block »), est destiné notamment à former une batterie robuste mécaniquement, tout en présentant une densité élevée d'éléments électrochimiques, notamment pour des applications dans le domaine des transports, en particulier dans l'automobile, le transport ferroviaire, ou encore le transport aérien.

Lorsqu'une batterie est utilisée dans le domaine des transports, les modules de batterie doivent être disposés dans des paniers structurels permettant d'assurer leur intégrité lors du transport, et d'offrir une résistance mécanique en cas de décélération importante.

De tels paniers comportent généralement une structure avec des parois d'extrémité, et des raidisseurs assurant une résistance longitudinale mécanique entre les parois.

Des exemples de paniers structurels sont décrits dans US2021/0175572 ou dans EP 3334617. D'autres exemples de paniers non structurels de réception de batterie sont décrits dans DE 102017005323 ou dans US 2016/0204401.

Les paniers structurels offrent une grande résistance mécanique, mais n'assurent pas un maintien adéquat des modules d'éléments électrochimiques compte tenu des tolérances de fabrication entre d'une part, la structure rigide indéformable formée par les raidisseurs et les parois et d'autre part, l'empilement d'éléments électrochimiques qui est plus ou moins comprimé.

Pour pallier ce problème, il est connu de munir les modules de batterie d'un châssis de maintien des éléments électrochimiques. Ce châssis assure que les surfaces frontales des éléments électrochimiques restent en contact les unes avec les autres. Il maintient également latéralement les éléments électrochimiques de chaque module.

Un tel châssis présent dans chaque module est donc efficace pour garantir une intégrité mécanique au module, mais présente le désavantage d'être encombrant.

La densité d'éléments électrochimiques reçus dans le panier structurel et donc la puissance totale de la batterie est ainsi limitée par l'espace occupé par les châssis.

Un but de l'invention est de fournir un panier structurel qui garantisse une grande robustesse mécanique, notamment pour des applications dans le domaine du transport ferroviaire, tout en offrant une densité d'éléments maximisée pour disposer d'une puissance électrique maximale.

À cet effet, l'invention a pour objet un panier structurel du type précité, caractérisé en ce qu'au moins un raidisseur est mobile transversalement sur le fond sur une course de réglage de position transversale du raidisseur, le panier structurel comprenant un système de verrouillage transversal du ou de chaque raidisseur mobile, dans au moins deux positions transversales distinctes le long de la course de réglage, notamment dans toute position transversale le long de la course de réglage.

Le panier structurel selon l'invention peut comprendre l'une ou plusieurs des caractéristiques suivantes, prise(s) isolément ou suivant toutes combinaisons techniquement possibles :
- le système de verrouillage transversal comprend au moins un trou oblong ménagé dans le fond, le trou oblong s'étendant transversalement par rapport à la direction longitudinale de réception de module, et au moins un organe de fixation transversale du raidisseur mobile traversant le trou oblong ;
- le fond comprend une face intérieure délimitant l'espace intermédiaire et une face extérieure opposée à la face intérieure, l'organe de fixation transversale comprenant une tête appliquée sur la face intérieure ;
- le fond délimite un logement de réception de la tête dans lequel débouche le trou oblong, la tête étant totalement reçue dans le logement ;
- l'organe de fixation transversale comprend au moins un méplat de blocage angulaire de l'organe de fixation transversale, le raidisseur définissant un orifice de passage de l'organe de fixation transversale délimité par au moins une face de blocage du méplat en rotation, la coopération entre le méplat et la face de blocage empêchant la rotation de l'organe de fixation transversale autour de son axe et dans lequel avantageusement, l'orifice de passage de l'organe de fixation transversale est défini entre deux faces opposées de blocage, l'organe de fixation transversale comprenant deux méplats opposés coopérant respectivement avec les faces opposées de blocage ;
- le raidisseur définit le long de son bord supérieur au moins un créneau, l'organe de fixation transversale comprenant une région supérieure en saillie, reçue dans le créneau, le système de verrouillage transversal comprenant un écrou de blocage engagé sur la région supérieure dans le créneau ;
- il comporte un système de verrouillage axial des raidisseurs sur les parois d'extrémité, le système de verrouillage axial comprenant, pour chaque raidisseur mobile transversalement, au moins un organe de fixation axiale et, pour chaque organe de fixation axiale, une cavité traversante ménagée dans une des parois d'extrémité, la cavité étant allongée transversalement, l'organe de fixation axial traversant la cavité pour être reçu dans le raidisseur ;
- le raidisseur est formé d'un profilé comprenant en section transversale une douille de réception d'un organe de fixation axiale, et un croisillon ajouré raccordé à la douille, le croisillon ajouré définissant au moins un renfoncement longitudinal dans une face latérale du raidisseur, le renfoncement longitudinal débouchant latéralement ;
- le profilé comporte au-dessus du croisillon ajouré, une région massive pleine définissant un orifice de réception d'un organe de fixation axial additionnel ;
- le raidisseur comprend deux faces latérales, au moins une face latérale étant munie d'une bande déformable longitudinale ;
- la bande déformable s'étend le long d'un bord du renfoncement longitudinal
- le fond est une plaque d'échange thermique délimitant au moins un canal de circulation d'un fluide de refroidissement.

L'invention a également pour objet une batterie, comportant :
- un panier structurel tel que défini plus haut;
- au moins un module de batterie comprenant plusieurs éléments électrochimiques empilés, chaque élément électrochimique comprenant deux surfaces frontales opposées, et deux surfaces latérales opposées, les éléments électrochimiques étant empilés les uns sur les autres par leurs surfaces frontales,
- le module de batterie comprenant optionnellement une bande de liaison reliant les éléments électrochimiques, la bande de liaison comprenant de préférence un substrat et une couche adhésive, la couche adhésive s'appliquant sur les surfaces latérales des éléments électrochimiques, et sur une surface frontale qui est une surface frontale d'extrémité de deux des éléments électrochimiques.

La batterie selon l'invention peut comprendre l'une ou plusieurs des caractéristiques suivantes, prise(s) isolément ou suivant toutes combinaisons techniquement possibles :
- les raidisseurs sont positionnés en regard des surfaces latérales des éléments électrochimiques.

L'invention a également pour objet un procédé de montage d'une batterie, comprenant les étapes suivantes :
- pré-montage d'un panier structurel, comprenant la fourniture d'un fond et la placement de deux parois d'extrémité en regard, faisant saillie par rapport au fond pour délimiter avec le fond un espace intermédiaire, les parois d'extrémité s'étendant transversalement par rapport à une direction longitudinale de réception de module dans l'espace intermédiaire;
   le pré-montage comprenant la fourniture d'une pluralité de raidisseurs et le raccordement des parois d'extrémité entre eux par au moins un raidisseur s'étendant parallèlement à la direction longitudinale de réception de module, au moins un autre raidisseur longitudinal étant disposé adjacent pour délimiter entre eux un compartiment de réception de module,
- disposition d'au moins un module de batterie comprenant plusieurs éléments électrochimiques empilés dans le compartiment de réception de module ;
   caractérisé en ce qu'au moins un raidisseur est mobile transversalement sur le fond sur une course de réglage de position transversale du raidisseur, le procédé de montage comportant les étapes suivantes :
- déplacement transversal du raidisseur mobile le long de la course de réglage dans une position transversale de montage ;
- mise en place d'un système de verrouillage transversal du raidisseur mobile dans la position transversale de montage, la position transversale de montage étant choisie parmi au moins deux positions transversales distinctes le long de la course de réglage dans lesquelles le système de verrouillage transversal du raidisseur est configuré pour être mis en place.

L'invention sera mieux comprise à la lecture de la description qui va suivre, donnée uniquement à titre d'exemple, et faite en se référant aux dessins annexés, sur les lesquels :
- [Fig.1] La figure 1 est une vue en perspective de dessus d'une batterie comprenant un panier structurel selon l'invention, recevant une grande densité de modules de batterie ;
- [Fig.2] La figure 2 est une vue du panier de la figure 1, dans laquelle certains modules de batterie ont été retirés ;
- [Fig.3] La figure 3 est une vue en coupe schématique transversale d'un détail de la batterie de la figure 1, illustrant en particulier la coupe transversale d'un raidisseur au niveau du système de verrouillage transversal ;
- [Fig.4] La figure 4 est une vue en bout du raidisseur de la figure 3, la paroi d'extrémité ayant été omise ;
- [Fig.5] La figure 5 est une vue d'un détail de la figure 3, illustrant le blocage angulaire d'un organe de fixation dans le système de verrouillage transversal du raidisseur ;
- [Fig.6] La figure 6 est une vue de dessous de la batterie ;
- [Fig.7] La figure 7 est une vue d'un détail de la figure 6 illustrant un trou oblong dans lequel l'organe de fixation du raidisseur est disposé.

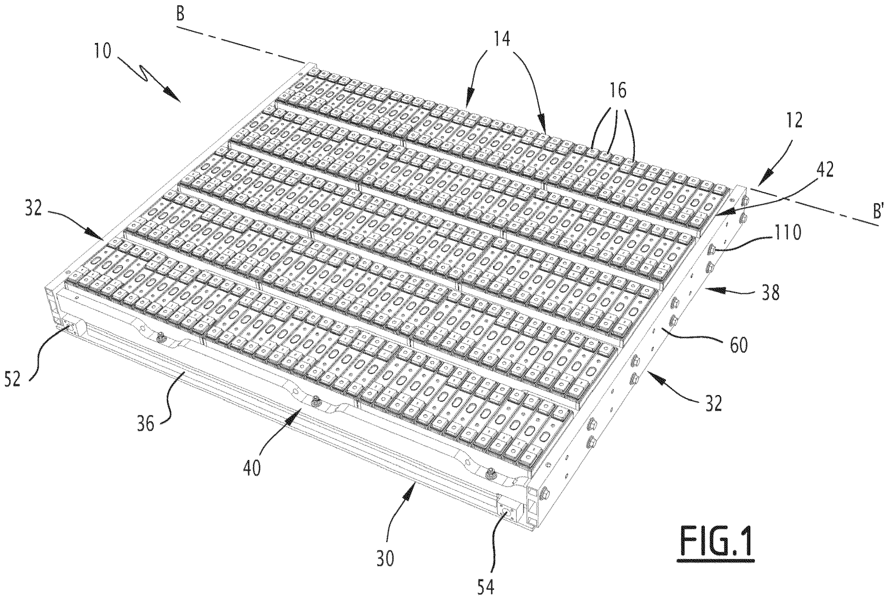

Une première batterie 10 selon l'invention est illustrée par les figures 1 à 7. La batterie 10 est destinée à être monté en particulier dans un véhicule, seul ou sous forme d'un empilement de batteries 10.

Les véhicules pouvant recevoir des batteries 10 selon l'invention sont par exemple des véhicules de transport terrestre tels que des véhicules automobiles ou ferroviaires ou encore des véhicules de transport naval ou aérien.

La batterie 10 est destinée à fournir une puissance électrique à des équipements du véhicule, et également, à être connecté à une source de puissance électrique pour être rechargé.

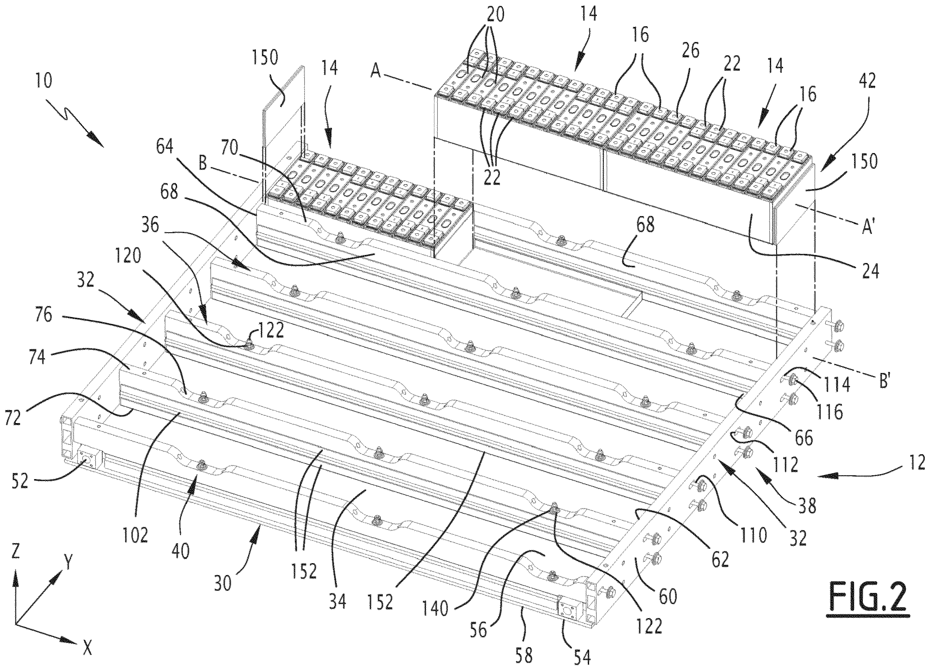

En référence aux figures 1 et 2, la batterie 10 comporte un panier structurel 12 et une pluralité de modules de batterie 14 formés d'empilements d'éléments électrochimiques 16, les modules de batterie 14 étant reçus et maintenus mécaniquement dans le panier structurel 12.

Par « élément électrochimique », on entend notamment un assemblage d'électrodes, d'électrolyte, de conteneur, de bornes et généralement de séparateurs, qui est une source d'énergie électrique obtenue par transformation directe d'énergie chimique.

Dans l'exemple représenté sur les figures, les éléments électrochimiques 16 sont des éléments prismatiques qui comprennent chacun un conteneur 18, avec notamment une forme générale de parallélépipède, en particulier de parallélépipède rectangle.

En variante (non représentée), les éléments électrochimiques 16 sont des poches.

Le conteneur 18 ou la poche contient des électrodes de polarités opposées empilées alternativement avec l'interposition d'au moins un séparateur.

Les éléments électrochimiques sont par exemple rechargeables de type Lithium-Ion, Ni/Cd, Ni/MH.

En référence à la figure 2, chaque élément électrochimique 16 présente deux surfaces frontales 20 opposées et deux surfaces latérales opposées 22 raccordant les surfaces frontales 20 entre elles.

Le module de batterie 14 comprend une pluralité d'éléments électrochimiques 16 empilés les uns sur les autres successivement par leurs surfaces frontales 20. Les deux surfaces frontales 20 de chaque élément électrochimique 16 sont chacune en contact respectivement avec la surface frontale 20 d'un autre élément électrochimique 16, à l'exception des éléments électrochimiques 16 aux extrémités du module de batterie 14 qui présentent une surface frontale 20 libre.

Les surfaces latérales 22 des éléments électrochimiques 16 sont généralement alignées les unes par rapport aux autres. Elles sont situées sensiblement dans deux plans s'étendant parallèlement à un axe longitudinal A-A' du module de batterie (voir figure 1).

Dans l'exemple représenté sur les figures, chaque module de batterie 14 est dépourvu de châssis de maintien. À cet égard, chaque module de batterie comprend avantageusement une bande de liaison 24 reliant les éléments électrochimiques 16 entre eux, la bande de liaison 24 étant fixée sur les surfaces latérales 22 et sur les surfaces frontales 20 d'extrémité de deux des éléments électrochimiques 16.

La bande de liaison est par exemple formée d'un ruban en matière plastique, muni d'un adhésif sur une face en contact avec les surfaces latérales 22 et avec la surface frontale 20.

Un exemple de bande de liaison 24 est décrit dans la demande de brevet français n°21 14005 de la Demanderesse.

Dans l'exemple représenté sur la figure 1 et sur la figure 2, le panier structurel 12 reçoit un ou plusieurs modules de batterie 14 disposés sous forme d'une rangée s'étendant suivant une direction longitudinale B-B' de réception de module. Dans l'exemple de la figure 2, chaque rangée de modules de batterie 14 contient trois modules de batterie 14 successifs disposés bout à bout dans un compartiment de réception du panier structurel 12.

Le nombre de modules de batterie dans chaque rangée est par exemple compris entre 1 et 10, notamment entre 2 et 5 .

Dans cet exemple, chaque élément électrochimique 16 définit des bornes 26 de raccordement électrique qui peuvent être raccordées entre elles et à des connecteurs externes à la batterie 10 via une connectique (non représentée).

En référence à la figure 2, le panier 12 comporte un fond 30, et des parois d'extrémité 32, montées transversalement sur le fond et délimitant entre elles un espace intermédiaire 34 de réception des modules de batterie 14.

Le panier 12 comporte en outre une pluralité de raidisseurs 36 raccordant entre eux les parois d'extrémité 32. Selon l'invention, au moins un raidisseur 36 est mobile sur le fond 30 transversalement par rapport à la direction longitudinale B-B' de réception de module sur une course de réglage de position transversale du raidisseur 36.

Le panier 12 comporte en outre un système 38 de verrouillage axial des raidisseurs 36 sur les parois d'extrémité 32, et un système 40 de verrouillage transversal des raidisseurs 36 dans au moins deux positions transversales distinctes le long de la course de réglage, notamment dans toute position transversale le long de la course de réglage.

Le panier structurel 12 comporte en outre avantageusement un système de calage 42 des modules 14.

Dans l'exemple représenté sur les figures, le fond 30 est une plaque d'échange thermique, par exemple réalisée en métal, en particulier en aluminium.

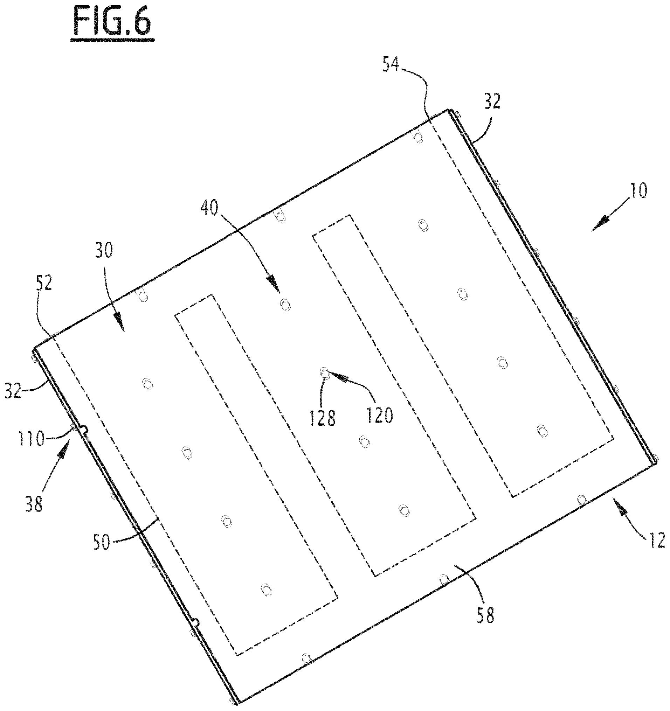

De préférence, la plaque d'échange thermique définit intérieurement au moins un canal 50 (visible sur la figure 6), définissant un chemin de circulation d'un fluide de refroidissement au sein de la plaque. Le ou chaque canal 50 est relié à un connecteur fluidique d'entrée 52 et un connecteur fluidique de sortie 54 respectivement pour l'alimentation et l'évacuation du fluide de refroidissement dans le canal 50.

Le fond 30 définit une face intérieure 56 qui délimite en partie l'espace intermédiaire 34 et une face extérieure opposée 58, visible sur la figure 6, qui peut constituer une face d'obturation d'une autre batterie 10 lorsque plusieurs batteries 10 sont empilées les uns sur les autres.

Les parois d'extrémité 32 font saillie verticalement par rapport au fond 30. Elles s'étendent sensiblement transversalement par rapport à la direction longitudinale B-B' de réception de module, le long des bords transversaux du fond 30.

Chaque paroi 32 est ici formée par un profilé ajouré. Chaque paroi 32 présente ainsi une face extérieure 60 verticale, et une face intérieure 62 verticale, opposée et parallèle à la face extérieure 60. La face intérieure 62 délimite partiellement l'espace intermédiaire 34.

Les raidisseurs 36 s'étendent parallèlement à la direction longitudinale B-B' de réception de module en raccordant les parois d'extrémité 32.

Chaque paire de raidisseurs 36 adjacents délimite un compartiment de réception d'une rangée de modules de batterie 14, entre les faces latérales 68, 70 des deux raidisseurs 36. Le compartiment de réception comprend de préférence une seule rangée de modules de batterie 14 comprenant un ou plusieurs modules de batterie 14 alignés parallèlement à la direction longitudinale B-B' de réception de module.

Chaque raidisseur 36 comprend une première extrémité longitudinale 64 fixée sur la face intérieure 62 d'une première paroi d'extrémité 32, et une deuxième extrémité longitudinale 66 fixée sur la face intérieure 62 d'une deuxième paroi d'extrémité 32 située en regard de la première paroi d'extrémité 32.

Chaque raidisseur 36 présente une forme profilée définissant une hauteur supérieure à son épaisseur.

Chaque raidisseur 36 présente ainsi des faces latérales opposées 68, 70, un bord inférieur 72 appliqué sur la face intérieure 56 du fond 30 et un bord supérieur 74.

Le bord supérieur 74 est ici avantageusement situé à une hauteur inférieure à la hauteur du bord supérieur de chaque paroi d'extrémité 32.

Dans l'exemple de la figure 2, pour chaque raidisseur 36 mobile transversalement, le bord supérieur 74 définit avantageusement au moins un créneau 76 de logement du système de verrouillage transversal 40, de préférence une pluralité de créneaux 76 espacés longitudinalement.

Comme indiqué précédemment, au moins un raidisseur 36, de préférence tous les raidisseurs 36 sauf un raidisseur 36 de référence, sont montés mobiles transversalement sur le fond 30 du panier 12 par rapport à la direction longitudinale B-B' de réception de module, sur une course de réglage de la position transversale du raidisseur 36.

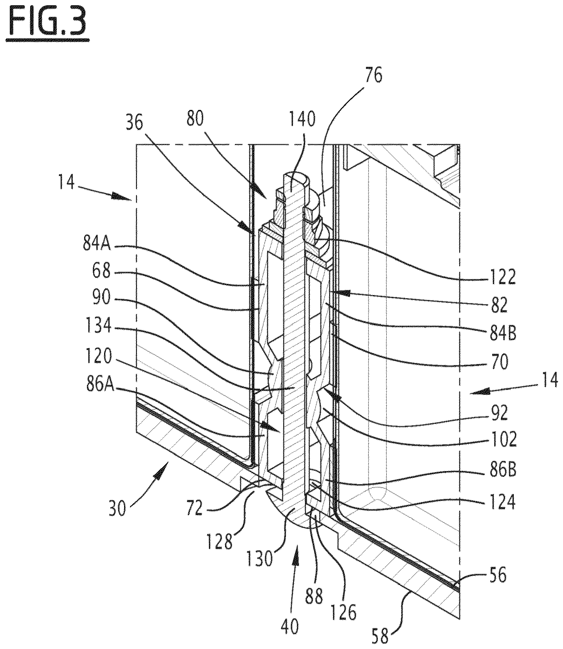

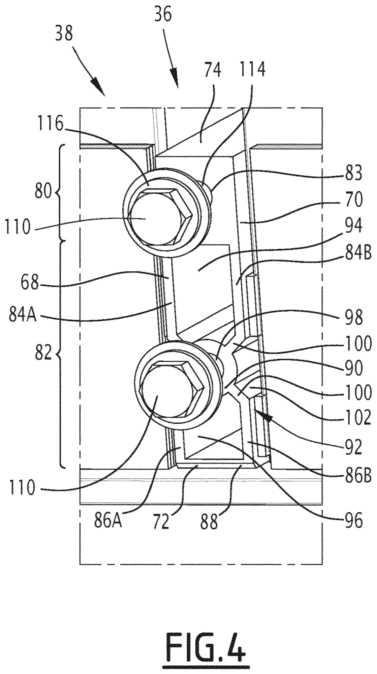

En référence à la figure 3 et à la figure 4, chaque raidisseur mobile 36 est formé d'un profilé présentant une région supérieure 80 de rigidification et une région inférieure 82 ajourée.

La région supérieure 80 est pleine, à l'exception des créneaux 76 qu'elle délimite le long du raidisseur 36. Comme visible sur la figure 4, elle définit intérieurement un orifice 83 de réception d'un organe de fixation du système de verrouillage axial 38, s'étendant parallèlement à la direction longitudinale B-B'.

La région inférieure 82 est venue de matière avec la région supérieure 80. Elle définit deux cloisons latérales droites 84A, 84B supérieures, deux cloisons latérales droites inférieures 86A, 86B et une cloison de fond 88 raccordant entre elles les deux cloisons latérales droites inférieures 86A, 86B.

La région inférieure 82 définit également une douille centrale 90 de réception d'un organe de fixation du système de verrouillage axial 38 et un croisillon ajouré 92 raccordant la douille centrale 90 aux cloisons latérales supérieures 84A, 84B et aux cloisons latérales inférieures 86A, 86B.

Les cloisons 86A, 86B et 84A, 84B définissent une partie des faces latérales 68, 70 du raidisseur 36. Les cloisons 84A, 86A sont de préférence situées dans le même plan, parallèlement au plan dans lequel sont situées de préférence les cloisons 84B, 86B. Elles s'étendent verticalement, parallèlement à la direction longitudinale B-B' de réception de module.

Les cloisons 84A, 84B ; 86A, 86B délimitent respectivement entre elles des espaces intermédiaires 94, 96 dépourvus de matière.

La douille centrale 90 définit un orifice central 98 de réception de l'organe de fixation du système de verrouillage axial 38 d'axe parallèle à la direction longitudinale B-B'. La douille centrale 90 est de forme cylindrique et présente un diamètre inférieur à la distance séparant les faces latérales 68, 70 entre elles.

Le croisillon ajouré 92 comporte des parois inclinées 100. Les parois inclinées 100 s'étendent à partir de chacune des cloisons 84A, 84B, 86A, 86B pour se raccorder sur la douille centrale 90.

Les parois inclinées 100 et la surface extérieure de la douille 90 définissent dans chaque face latérale 68, 70 du raidisseur 36, un renfoncement longitudinal 102 qui débouche latéralement vers l'extérieur. Le renfoncement 102 s'étend ici sur toute la longueur du raidisseur 36, parallèlement à la direction longitudinale B-B' de réception de module.

Ainsi, la région inférieure 82 présente une structure structurellement résistante tout en étant très légère.

Le système de verrouillage axial 38 comporte pour chaque raidisseur 36, à chaque extrémité 64, 66, au moins un organe de fixation axiale 110 qui est ici formé par une vis.

Dans l'exemple représenté sur la figure 4, le système de verrouillage axial 38 comprend à chaque extrémité 64, 66 d'un raidisseur 36, deux organes de fixation axiale 110, reçus respectivement dans l'orifice 83 ménagé dans la région supérieure 80 et dans l'orifice 98 délimité dans la douille centrale 90.

En référence à la figure 2, pour permettre l'insertion et la fixation des organes de fixation axiale 110, le système de verrouillage axial 38 comprend en outre pour chaque raidisseur 36, une cavité traversante 112 ménagée à travers la paroi d'extrémité 32.

Dans cet exemple, pour les raidisseurs 36 mobiles transversalement, la cavité 112 est de forme allongée horizontalement (voir figure 2), perpendiculairement à la direction longitudinale B-B' de réception de module.

La longueur de la cavité 112 est supérieure ou égale à la course de réglage de la position transversale du raidisseur 36.

L'organe de fixation axiale 110 comporte de préférence une tige 114 s'étendant à travers la cavité traversante 112 et à travers le raidisseur 36, et une tête 116 s'appliquant sur la face extérieure 60 de la paroi d'extrémité 32, en chevauchant la cavité traversante 112.

Le système de verrouillage transversal 40 est configuré pour bloquer transversalement chaque raidisseur mobile 36 dans aux moins deux positions données le long de sa course transversale, de préférence dans chaque position donnée le long de sa course transversale.

Pour chaque raidisseur 36, le système de verrouillage transversal 40 comporte, au moins un organe de fixation transversale 120 (visible notamment sur la figure 3), de préférence plusieurs organes de fixation transversale 120 répartis le long du raidisseur 36 en étant avantageusement reçus chacun dans un créneau 76.

Le système de verrouillage transversal 40 comporte, pour chaque organe de fixation transversale 120, un écrou de blocage 122.

Le système de verrouillage transversal 40 définit en outre, pour chaque organe de fixation transversale 120, un orifice traversant 124 de blocage en rotation de l'organe de fixation 120 par rapport au raidisseur 36, ménagé dans la cloison de fond 88 du raidisseur 36, un trou oblong 126 d'insertion de l'organe de fixation transversale 120 à travers le fond 30, autorisant le déplacement transversal du raidisseur 36 sur la course donnée, et un logement périphérique 128, dans lequel débouche le trou oblong 126, pour contenir l'extrémité inférieure de l'organe de fixation transversale 120.

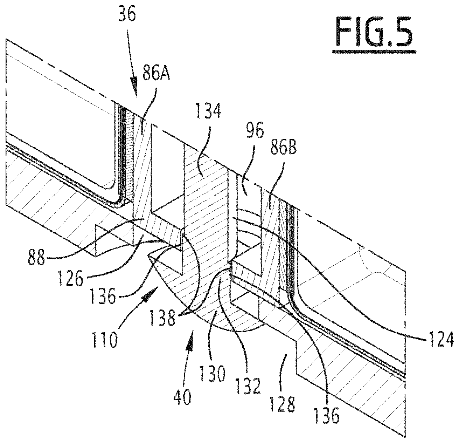

Comme illustré par la figure 5, l'organe de fixation transversale 120 comprend une tête inférieure 130, une partie intermédiaire 132 de blocage en rotation, destinée à coopérer avec l'orifice traversant 124 ménagé dans le raidisseur 36, et une tige 134 destinée à recevoir à son extrémité supérieure l'écrou 122.

La tête 130 présente une étendue transversale supérieure à la largeur du trou oblong 126 pour chevaucher le trou oblong 126. Elle présente une étendue transversale inférieure à la largeur du logement périphérique 128.

Elle est ainsi totalement reçue dans le logement périphérique 128 lorsque l'organe de fixation transversale 120 est inséré à travers le trou oblong 126.

La partie intermédiaire 132 définit au moins un méplat 136, de préférence deux méplats opposés 136.

De même, l'orifice traversant 124 est définit latéralement par deux faces latérales 138 sur la cloison de fond 88, s'étendant en regard et au contact de chaque méplat 136 lorsque la partie intermédiaire 132 est insérée à travers le trou oblong 126 et l'orifice traversant 124. L'orifice traversant 124 ménagé dans chaque raidisseur 36 est allongé le long de la direction longitudinale B-B' de réception de module. Il s'étend donc perpendiculairement au trou oblong 126

Dans cette position, chaque méplat 136 coopère avec les faces latérales 138 définies sur la cloison de fond 88. Ainsi, les faces 138 définissent des faces de blocage angulaire des méplats 136 en rotation, qui bloquent en rotation l'organe de fixation transversale 120 autour de son axe.

La tige 134 s'étend verticalement à travers toute la hauteur du raidisseur 36. Elle présente une région supérieure 140 faisant saillie dans le créneau 76, sur laquelle l'écrou 122 est engagé.

Le trou oblong 126 s'étend transversalement par rapport à la direction longitudinale B-B' de réception de module. Il présente une longueur supérieure ou égale à la course du raidisseur 36 transversalement par rapport à la direction B-B'.

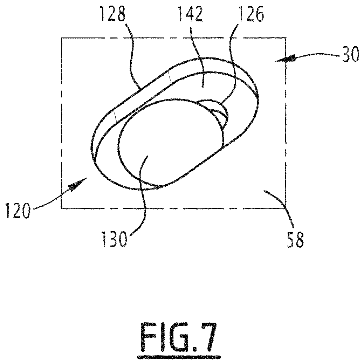

En référence à la figure 7, le logement périphérique 128 s'étend à la périphérie du trou oblong 126. Il présente ici une forme homothétique à celle du trou oblong 126. Il est délimité vers l'intérieur par un épaulement périphérique 142 sur lequel s'appuie la tête 130.

Comme visible sur la figure 2, le système de calage 42 comporte par exemple des cales axiales 150 destinées à s'interposer entre une face intérieure 62 d'une paroi 32 et la surface frontale 20 d'extrémité d'un module 14 adjacent. En fonction de leur épaisseur, les cales 150 sont propres à maintenir en compression axiale les éléments électrochimiques 16 contenus dans chaque module 14.

En référence aux figures 2 et 4, le système de calage 42 comporte en outre au moins une bande latérale déformable 152, en particulier deux bandes latérales déformables 152 parallèles sur chaque face latérale 68, 70 d'un raidisseur 36 mobile.

Dans cet exemple, les bandes latérales 152 s'étendent parallèlement à la direction longitudinale B-B', de part et d'autre de chaque renfoncement longitudinal 102. Elles sont formées par exemple de mousse compressible. Elles sont positionnées de manière simple et précise lors de l'assemblage le long de chaque bord du renfoncement longitudinal 102.

L'assemblage d'une première batterie 10 selon l'invention va maintenant être décrit.

Initialement, un fond 30 et des parois d'extrémité 32 sont fournis. Un premier raidisseur fixe 36 destiné à former une face latérale du panier structurel 10 est monté entre les parois d'extrémité 32 à une extrémité latérale de celles-ci. Le bord du fond 30 est assemblé sous le raidisseur fixe 36 par insertion d'organes de fixation à travers des encoches ménagées dans le bord du fond 30 et à travers le raidisseur fixe 36.

Le système de verrouillage axial 38 de ce raidisseur 36 est activé en mettant en place les organes de fixation axiale 110 par exemple par vissage dans les cavités traversantes du raidisseur 36.

Ensuite, au moins un module 14, de préférence une pluralité de modules 14 formant une rangée sont disposés parallèlement à la direction longitudinale B-B' de réception de module en les appliquant contre une face latérale 68 du raidisseur fixe 36.

Puis, au moins un raidisseur mobile 36 est mis en place de l'autre côté du ou de chaque module 14.

Préalablement à la mise en place, les organes de fixation axiale 110 sont insérés dans les cavités traversantes 112 et sont montés sans être serrés dans les orifices correspondants dans le raidisseur mobile 36 aux extrémités longitudinales 64, 66 de celui-ci.

De même, les organes de fixation transversale 120 sont insérés à travers le logement périphérique 128, le trou oblong 126, puis l'orifice traversant 124, avant de traverser tout le raidisseur 36 pour que la région supérieure 140 de la tige 134 fasse saillie dans un créneau 76.

Le raidisseur mobile 36 est alors déplacé transversalement pour être plaqué contre les surfaces latérales 22 du module 14.

Grâce à la présence des trous oblongs 126, les organes de fixation transversale 120 se déplacent transversalement conjointement avec le raidisseur mobile 36 pour s'ajuster à une position transversale choisie. Grâce aux cavités 112 de forme allongée horizontalement, les organes de fixation axiale 110 se déplacent également.

La position transversale est par exemple choisie pour assurer un maintien latéral du ou de chaque module 14 et éventuellement une légère compression, avec un amortissement assuré par les bandes longitudinales 152.

Lorsque le positionnement est correct, les écrous 122 sont engagés sur les régions supérieures 140 et sont activés pour fixer transversalement le raidisseur 36 en position.

Cette fixation peut être activée par le dessus du panier structurel, sans avoir à accéder au-dessous du fond 30, puisque les parties intermédiaires 132 des organes de fixation transversale 120 sont bloqués en rotation par les faces de blocage 138 sur le raidisseur 36 coopérant avec les méplats 136 sur l'organe de fixation transversale 120.

Ceci étant fait, le cas échéant, au moins une autre rangée de module 14 est mise en place et au moins un autre raidisseur mobile 36 est ajusté en position transversale puis fixé en position, jusqu'au remplissage total du panier 12.

Comme illustré par la figure 1, une densité très importante d'éléments électrochimiques 16 peut alors être stockée dans la batterie 10, tout en assurant un maintien efficace et structurel des modules 14, tant axialement que transversalement.

La batterie 10 ainsi obtenue est très rigide mécaniquement, grâce à la présence des raidisseurs 36 qui assurent une résistance mécanique longitudinale.

Les modules 14 peuvent ainsi être dépourvus de châssis de maintien, puisque les parois d'extrémité 32, d'une part, et les raidisseurs 36, d'autre part, fournissent le maintien mécanique nécessaire.

Ainsi, un espace significatif est gagné dans l'espace intermédiaire 34 du panier structurel 12, ce qui autorise la mise en place de plusieurs modules 14 bout à bout.

A cet égard, le panier 12 structurel est dépourvu de traverse perpendiculaire à la direction longitudinale B-B' s'étendant entre les parois 32.

La puissance fournie par la batterie 10 est ainsi augmentée de manière significative. Cette puissance peut en outre augmenter lorsque les batteries 10 sont superposées les unes sur les autres.

Il est en outre possible de régler en compression la pression appliquée sur les éléments électrochimiques 16 en modifiant la position transversale des raidisseurs mobiles 36, et/ou en disposant de cales axiales 150 entre les parois d'extrémité 32.

Les intervalles de tolérance sur la fabrication des éléments électrochimiques 16 sont en outre absorbés par le réglage possible de la position transversale des raidisseurs 36.

Les raidisseurs 36 présentent en outre avantageusement une structure profilée légère, leur installation est simple et peut s'adapter à différents types d'éléments électrochimiques 16, par exemple sous forme d'éléments prismatiques ou de poches.

## Revendications

1. Panier structurel (12) destiné à recevoir au moins un module de batterie (14) comprenant plusieurs éléments électrochimiques (16) empilés, le panier structurel (12) comportant :
- un fond (30) ;
- deux parois (32) d'extrémité en regard, faisant saillie par rapport au fond (30) pour délimiter avec le fond (30) un espace intermédiaire (34), les parois (32) d'extrémité étant destinées à s'étendre transversalement par rapport à une direction longitudinale (B-B') de réception de module dans l'espace intermédiaire (34);
- une pluralité de raidisseurs (36) longitudinaux, raccordant les parois (32) d'extrémité entre elles, les raidisseurs (36) s'étendant parallèlement à la direction longitudinale (B-B') de réception de module, chaque paire de raidisseurs (36) longitudinaux adjacents délimitant entre eux un compartiment de réception de module,
**caractérisé en ce qu'**au moins un raidisseur (36) est mobile transversalement sur le fond (30) sur une course de réglage de position transversale du raidisseur (36), le panier structurel (12) comprenant un système de verrouillage transversal (40) du ou de chaque raidisseur (36) mobile dans au moins deux positions transversales distinctes le long de la course de réglage, notamment dans toute position transversale le long de la course de réglage.

2. Panier structurel (12) selon la revendication 1, dans lequel le système de verrouillage transversal (40) comprend au moins un trou oblong (126) ménagé dans le fond (30), le trou oblong (126) s'étendant transversalement par rapport à la direction longitudinale (B-B') de réception de module, et au moins un organe de fixation transversale (120) du raidisseur (36) mobile traversant le trou oblong (126).

3. Panier structurel (12) selon la revendication 2, dans lequel le fond (30) comprend une face intérieure (56) délimitant l'espace intermédiaire (34) et une face extérieure (58) opposée à la face intérieure (56), l'organe de fixation transversale (120) comprenant une tête (130) appliquée sur la face intérieure (56).

4. Panier structurel (12) selon la revendication 3, dans lequel le fond (30) délimite un logement (128) de réception de la tête (130) dans lequel débouche le trou oblong (126), la tête (130) étant totalement reçue dans le logement (128).

5. Panier structurel (12) selon l'une quelconque des revendications 2 à 4, dans lequel l'organe de fixation transversale (120) comprend au moins un méplat (136) de blocage angulaire de l'organe de fixation transversale (120), le raidisseur (36) définissant un orifice (124) de passage de l'organe de fixation transversale (120) délimité par au moins une face de blocage (138) du méplat (136) en rotation, la coopération entre le méplat (136) et la face de blocage (138) empêchant la rotation de l'organe de fixation transversale (120) autour de son axe et dans lequel avantageusement, l'orifice de passage de l'organe de fixation transversale (120) est défini entre deux faces opposées de blocage (138), l'organe de fixation transversale (120) comprenant deux méplats (136) opposés coopérant respectivement avec les faces opposées de blocage (138).

6. Panier structurel (12) selon l'une quelconque des revendications 2 à 5, dans lequel le raidisseur (36) définit le long de son bord supérieur au moins un créneau (76), l'organe de fixation transversale (120) comprenant une région supérieure (140) en saillie, reçue dans le créneau (76), le système de verrouillage transversal (40) comprenant un écrou de blocage (122) engagé sur la région supérieure (140) dans le créneau (76).

7. Panier structurel (12) selon l'une quelconque des revendications précédentes, comprenant un système de verrouillage axial (38) des raidisseurs (36) sur les parois d'extrémité (32), le système de verrouillage axial (38) comprenant, pour chaque raidisseur (36) mobile transversalement, au moins un organe de fixation axiale (110) et, pour chaque organe de fixation axiale (110), une cavité traversante (112) ménagée dans une des parois d'extrémité (32), la cavité (112) étant allongée transversalement, l'organe de fixation axial (110) traversant la cavité (112) pour être reçu dans le raidisseur (36).

8. Panier structurel (12) selon la revendication 7, dans lequel le raidisseur (36) est formé d'un profilé comprenant en section transversale une douille (90) de réception d'un organe de fixation axiale (110), et un croisillon ajouré (92) raccordé à la douille (90), le croisillon ajouré (92) définissant au moins un renfoncement longitudinal (102) dans une face latérale (68, 70) du raidisseur (36), le renfoncement longitudinal (102) débouchant latéralement.

9. Panier structurel (12) selon la revendication 8, dans lequel le profilé comporte au-dessus du croisillon ajouré (92), une région massive pleine (90) définissant un orifice de réception d'un organe de fixation axial (110) additionnel.

10. Panier structurel (12) selon l'une quelconque des revendications précédentes, dans lequel le raidisseur (36) comprend deux faces latérales (68, 70), au moins une face latérale (68, 70) étant munie d'une bande déformable (152) longitudinale.

11. Panier structurel (12) selon la revendication 10, prise en combinaison avec la revendication 8, dans lequel la bande déformable (152) s'étend le long d'un bord du renfoncement longitudinal (102).

12. Panier structurel (12) selon l'une quelconque des revendications précédentes, dans lequel le fond (30) est une plaque d'échange thermique délimitant au moins un canal (50) de circulation d'un fluide de refroidissement.

13. Batterie (10), comportant :
- un panier structurel (12) selon l'une quelconque des revendications précédentes ;
- au moins un module de batterie (14) comprenant plusieurs éléments électrochimiques (16) empilés, chaque élément électrochimique (16) comprenant deux surfaces frontales (20) opposées, et deux surfaces latérales (22) opposées, les éléments électrochimiques (16) étant empilés les uns sur les autres par leurs surfaces frontales (20), le module de batterie (14) comprenant optionnellement une bande de liaison (24) reliant les éléments électrochimiques (16), la bande de liaison (24) comprenant de préférence un substrat et une couche adhésive, la couche adhésive s'appliquant sur les surfaces latérales (22) des éléments électrochimiques (16), et sur une surface frontale (20) qui est une surface frontale (20) d'extrémité de deux des éléments électrochimiques (16).

14. Batterie (10) selon la revendication 13, dans laquelle les raidisseurs (36) sont positionnés en regard des surfaces latérales (22) des éléments électrochimiques (16).

15. Procédé de montage d'une batterie (10), comprenant les étapes suivantes
- pré-montage d'un panier structurel (12), comprenant la fourniture d'un fond (30) et la placement de deux parois (32) d'extrémité en regard, faisant saillie par rapport au fond (30) pour délimiter avec le fond (30) un espace intermédiaire (34), les parois (32) d'extrémité s'étendant transversalement par rapport à une direction longitudinale (B-B') de réception de module dans l'espace intermédiaire (34);
le pré-montage comprenant la fourniture d'une pluralité de raidisseurs (36) et le raccordement des parois (32) d'extrémité entre eux par au moins un raidisseur (36) s'étendant parallèlement à la direction longitudinale (B-B') de réception de module, au moins un autre raidisseur (36) longitudinal étant disposé adjacent pour délimiter entre eux un compartiment de réception de module,
- disposition d'au moins un module de batterie (14) comprenant plusieurs éléments électrochimiques (16) empilés dans le compartiment de réception de module ;
**caractérisé en ce qu'**au moins un raidisseur (36) est mobile transversalement sur le fond (30) sur une course de réglage de position transversale du raidisseur (36), le procédé de montage comportant les étapes suivantes :
- déplacement transversal du raidisseur (36) mobile le long de la course de réglage dans une position transversale de montage ;
- mise en place d'un système de verrouillage transversal (40) du raidisseur (36) mobile dans la position transversale de montage, la position transversale de montage étant choisie parmi au moins deux positions transversales distinctes le long de la course de réglage dans lesquelles le système de verrouillage transversal (40) du raidisseur (36) est configuré pour être mis en place.
